# EUROPEAN PATENT SPECIFICATION

(11) **EP 4 074 084 B1**
(45) Date of publication and mention of the grant of the patent: **18.02.2026**
(21) Application number: 20820157.4
(22) Date of filing: 09.12.2020
(51) Int. Cl.: H04W 4/12, H04W 4/42, H04L 65/1023, H04L 65/1063, H04M 1/72412, H04M 3/487

(54) **METHOD AND SYSTEM FOR PROVIDING PUBLIC ANNOUNCEMENTS**
VERFAHREN UND SYSTEM ZUR BEREITSTELLUNG VON ÖFFENTLICHEN DURCHSAGEN
PROCÉDÉ ET SYSTÈME DE FOURNITURE D'ANNONCES PUBLIQUES

(30) Priority: 12.12.2019 GB 201918342
(43) Date of publication of application: 19.10.2022
(73) Proprietor: ALSTOM Holdings, 93400 Saint-Ouen-sur-Seine (FR)
(72) Inventor: SALI, Hermant, Maharashtra, Pune 411021 (IN)
(74) Representative: Zimmermann & Partner Patentanwälte mbB
(86) International application number: PCT/EP2020/085283
(87) International publication number: WO 2021/116173

(56) References cited:
- KR-B1- 101 534 761
- US-A1- 2018 124 154

## Description

### Technical field

The present invention relates to methods and systems for providing public announcements in a vehicle for public passenger transport, in particular a respective railway vehicle.

### Background

Many vehicles for public passenger transport are equipped with an announcement system for providing live messages such as such as safety announcements, status announcements, and connecting travel announcements to the passengers by a driver or another crew member such as a steward or a conductor. For example, analog lines may be used for making public announcements by a crew member from fixed locations in the vehicle.

Further, document US 10 171556 B2 describes systems and methods for transferring a public announcement message to an onboard public announcement system (OPAS) installed on a vehicle using a personal electronic device. The personal electronic device establishes a wireless network connection to the OPAS to transmit a public announcement message stored on a personal electronic device. The personal electronic device transmits the public announcement message to the OPAS via the wireless network connection. The personal electronic device may download messages from a remote public announcement server for transfer to the OPAS. The personal electronic device may also record messages and control the playback of messages on the OPAS.

Furthermore, document EP 2 874 860 B1 describes an operating system for operating functional units in a rail vehicle. At least one base station is provided in each car of the rail vehicle. Each base station communicates, via a wireless interface, with a mobile terminal of an authenticated user, in particular an authenticated train conductor, who operates functional units of the rail vehicle via a graphical user interface of the mobile terminal. The train conductor has the option of making announcements. Audible announcements may be stored in advance and be activated by the train conductor by operating an appropriate sensitive area of the graphical interface.

The existing solutions for public announcements may be not user-friendly enough, have a comparatively large overhead for recording, storing, transferring, and/or playing the announcements, and/or can only be made from specific static locations in the vehicle.

### Problem to be solved

It is an object of the invention to provide methods, systems and devices allowing for improved performance and/or efficiency of public announcement systems, in particular with respect to providing live messages and/or in terms of time. Thus, the user satisfaction may be enhanced.

Said task is solved by the subject matter of the independent claims.

According to an embodiment of a method for providing public announcements in a vehicle for public passenger transport, in particular a respective railway vehicle, the method includes connecting a mobile device to a server of the vehicle, using the connected mobile device to transfer a spoken message as VolP message (Voice over IP message) to the server, transmitting the VolP message from the server to an audio system of the vehicle, and using the audio system to convert the VoIP message into an analog audio signal.

The spoken message is typically not pre-recorded (prior to connecting the mobile device to the server), i.e. a live message.

By using a mobile device, a crew member, in particular a conductor may make live announcements from different places in the train.

Further, at least the performance of public announcements in public transport vehicle may be improved due to using VoIP technology.

The mobile device may be a smart phone or a tablet computer.

Further, the mobile device typically includes a storage storing a web application or a mobile application which may be used for establishing a data connecting to the server, connecting to the server, recording the spoken (live) message, converting the spoken message into VoIP (VoIP message), converting the spoken message on the fly into VoIP (VoIP message) and/or transferring the message converted into VoIP (herein referred to as VoIP message) to the server when running on the mobile device.

The term "app" as used herein shall embrace the terms "web application" and "mobile application".

The term "server" as used herein shall refer both to a computer program (software) and a device providing functionality for other programs or devices, typically called "clients", in particular to a respective device including the software for providing server functionality (for clients) in a network, in particular a network using the internet protocol suite, Transmission Control Protocol / Internet Protocol (TCP/IP) and/or User Datagram Protocol / Internet Protocol (UDP/IP). In the following a device providing server functionality in a network is also referred to as "host".

The mobile device may by wirelessly connected to a wireless interface of the vehicle which is connected to the VoIP server, a wireless router of the vehicle which connected to the VolP server, or any other device of the vehicle connected to the VolP server and providing a wireless interface for communication with the mobile device. In other words, the mobile device may be (wirelessly) connected to a Wi-Fi network of the vehicle (which is different from the local area network of the vehicle).

Accordingly, connecting the mobile device to the server typically includes connecting the mobile device to and/or via the wireless interface or the wireless router of the vehicle, and/or the other device providing the wireless interface.

Further, connecting the mobile device to the server may include logging in on the server, e.g. using a username and a password that may be provided by or via the app.

Accordingly, it may not be required to registered the mobile device on a fixed terminal within the vehicle. However, the mobile device is typically pre-registered as crew-member device.

The wireless interface may include a (wireless) router and one or more wireless access points.

The server, the audio system, and the wireless interface (in particular the wireless access point(s) and/or the wireless router) are typically connected with each other via a local area network of the vehicle, in particular a local area network that is a wired data network and/or uses the Internet Protocol and/or Ethernet technology.

For example, the local area network may use coaxial cable, twisted pair links and/or fiber optic links in conjunction with switches as a shared medium for information transfer.

Using the connected mobile device to transfer the spoken message may include recording the spoken message and converting the spoken message into the VoIP message after connecting the mobile device, sending the VolP message to the server, receiving the VolP message at the server, and/or recording the VoIP message by the server.

The spoken message may be converted into the VolP message during recording (on the fly).

Further, the recorded message may be deleted and/or not archived on the mobile device after converting the spoken message into the VoIP message.

Accordingly, overhead and storage requirements may be reduced.

The method may further include:
- transmitting a first code from the mobile device to the server to indicate that the spoken message is to be transferred,
- awaiting an input of a user prior to initiating transmitting the first code,
- transmitting a second code from the server to the mobile device to initiate at least one of sending the VoIP message to the server and recording the VoIP message by the server,
- receiving the second code at the mobile device,
- transmitting a third code from the mobile device to the server to indicate an end of sending the VoIP message to the server,
- stopping the recording of the VoIP message by the server after receiving the third code or after a predefined duration of silence (timeout without receiving further VoIP-packages from the mobile device), and/or
- sending an acknowledge message from the VolP server to the mobile device.

Accordingly, communication and/or transferring the VoIP message to the server may be facilitated.

The VoIP server typically supports different languages, and is typically configured for a specific language in these embodiments, for example a preselected language such as English. This helps the server broadcast the audio message such as 'Please start recording the message and press # to end the message' in the configured language to the mobile device.

Further, the mobile device typically sends the language code to the Server in the first code/message in these embodiments.

The VoIP message is typically transmitted from the mobile device to the server using a real time transmission protocol (RTP), in particular a secure real time transmission protocol (SRTP) for safety reasons.

Further, the VoIP message is typically transmitted from the server to the audio system using the session initiation protocol (SIP, in particular RFC 3261).

More typically, the respect VolP-functionality is implemented via SIP and RTP, in particular using SIP and SRTP.

Accordingly, the server typically provides at least one of SIP-server functionality and VoIP-server functionality.

After converting the VolP message into an analog audio by the audio system, the analog audio signal is typically broadcast.

This may include transmitting the analog audio signal to one or more loudspeakers of the audio system and/or one or more analog audio connectors of the audio system.

Note that the VoIP message may also be transferred from a controller of the audio system to a loudspeaker or loudspeakers of the audio system, wherein the loudspeaker(s) is(are) configured to convert the VolP message (VM) into a respective analog audio signal, these loudspeakers support VoIP and host a respective SIP agent.

In other words, the method for providing public announcements may include connecting a mobile device to a server of the vehicle, using the connected mobile device to transfer a spoken message as VolP message to the server, transmitting the VoIP message from the server to an audio system of the vehicle, and using the audio system to emit the VoIP message as audible (analog) signal in the vehicle. This may include converting the VolP message into an analog signal, transmitting the analog signal and emitting the analog signal in this order and/or transmitting the VolP message, converting the VoIP message into an analog signal and emitting the analog signal in this order.

Typically, the VolP message is only transmitted from the server to the audio system after completely receiving the VoIP message from the mobile device, more typically with a delay.

The delay between completely receiving the VoIP message at the server and transmitting the VolP message is typically equal to or larger than a predefined first value and/or equal to less than a predefined second value.

In particular, the delay may be at least about 0.25 s or 0.5 s (predefined first value).

Further, the delay may be smaller than or equal to about 5 s, more typically 2 s or even 1 s (predefined second value) to avoid unwanted long delay times in emergencies.

The quality of the public announcement may be significantly improved, in particular when the live message is recorded with the mobile device next to loudspeaker of the audio system (since unwanted feedback can be avoided). Further, the performance in terms of time may be improved significantly due to the usage of VoIP technology.

In other words, the server typically provides VoIP-server functionality with delayed paging.

According to an embodiment of a system for providing public announcements, the system includes a wireless interface provided by a vehicle for public passenger transport, and connected to a local area network of the vehicle, a server provided by the vehicle and connectable to the local area network, a mobile device (wirelessly) connectable to the server via the wireless interface and the local area network, the mobile device being configured to send, in a connected state, a spoken message as VolP message to the server, and an audio system provided by the vehicle, connectable with the server via the local area network, and configured to receive, in a connected state, the VoIP message from the server and to convert the received VoIP message into an analog audio signal.

Typically, the system is configured to perform the methods as explained herein.

As already explained above, the mobile device may be a smartphone, a tablet computer or the like.

Further, the mobile device may include an app which is, when running on the mobile device configured to establish a data connecting to the server, send the spoken message as VolP message to the server and the other functions explained above.

The local area network is typically a wired data network and/or uses the Internet Protocol and/or Ethernet technology.

Further, the server, the mobile device, the app, and/or the audio system, typically any of the said devices is configured to use a session initiation protocol (SIP) and a real time transmission protocol (RTP), in particular a secure real time transmission protocol (SRTP).

The server is typically operable as a VolP-server, and the mobile device, the app and the audio system are typically operable as SIP-agent.

The server may e.g. be provided by one or more computer devices of a passenger comfort system of the vehicle, the computer(s) hosting the VoIP server typically bridging the Wi-Fi network of the vehicle and the local area network of the vehicle.

In case the existing computing devices of the comfort system does not allow for hosting the VoIP server due to technical reasons, a new computing device may be added to the comfort system to host the VoIP server.

Further, the server is typically configured to transmit the VoIP message to the audio system after completely receiving the VoIP message from the mobile device, typically with a delay which may be equal to or larger than a predefined first value of e.g. about 0.2 s or 0.5 s and/or equal to or less than a predefined second value of e.g. about 5 s, 2 s or 1s.

Further, the system typically includes a railway vehicle as the vehicle.

According to an embodiment of a vehicle for public passenger transport, in particular a respective railway vehicle, the vehicle includes a local area network, a device connected to the local area network and providing a wireless interface, such as a wireless router optionally connected with wireless access point, a server connected to the local area network, and an audio system connected with the server via the local area network, configured to receive a VoIP message from the server and to convert the VoIP message into an analog audio signal, in particular a server as explained herein and an audio system as explained herein.

A mobile device, in particular a mobile device as explained herein may be connectable to the server via the wireless interface provided by the vehicle and connected with the local area network, wherein the mobile device is configured to send in a connected state a spoken message as VolP message to the server.

Other embodiments include on one or more computer-readable storage media, and one or more computer programs recorded on the one or more computer-readable storage media or computer storage devices, and configured to perform the processes of the methods described herein.

In particular, a computer program and/or a computer-readable storage medium may include instructions which, when executed by a one or more computing units (processors) of a system, in particular a public announcement system disposed in a public transport vehicle, cause the system to carry out the processes of the methods explained herein.

The above-described embodiments can be combined with each other in any way if not specified otherwise. Those skilled in the art will recognize additional features and advantages upon reading the following detailed description, and upon viewing the accompanying drawings.

### Brief description of the figures

The attached drawings illustrate embodiments and together with the description serve to explain the principles of the invention. The elements of the drawings are shown relative to each other and are not necessarily to scale.

The same reference numbers denote similar or even equal components.
FIG. 1A is a block diagram schematically illustrating a system providing public announcements according to embodiments.
FIG. 1B is a block diagram schematically illustrating a system providing public announcements according to embodiments.
FIG. 2A is a block diagram schematically illustrating a system providing public announcements according to embodiments.
FIG. 2B illustrates a flow chart of a method for providing public announcements according to embodiments.
FIG. 2C illustrates a flow chart of a method for providing public announcements according to embodiments.

### Detailed description

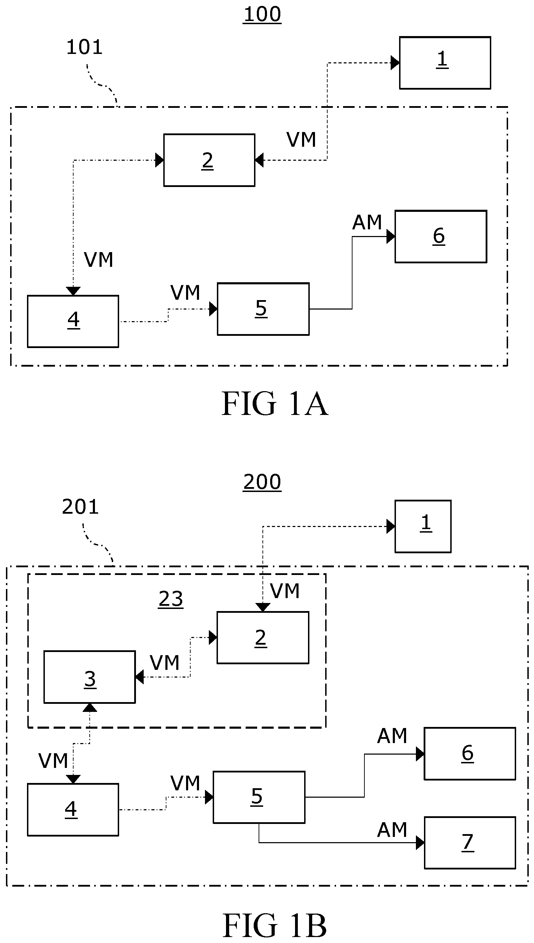

FIG. 1A is a block diagram schematically illustrating a system 100 for providing public announcements.

In the exemplary embodiment, system 100 includes a wireless interface 23, a server 4 and an audio system 5 arranged in a passenger train 101. As indicated by the dashed-dotted arrows in Fig. 1A, wireless interface 23 for providing a Wi-Fi network of a train , server 4 and the audio system 5 are connected with each other via a local area network of the train.

A mobile device 1, in particular a mobile device of a conductor or another crew member is configured to send a spoken message as VolP message VM to the server 4 when connected to the server 4 via the wireless interface 23 and the local area network.

For example, the (pre-registered) mobile device 1 of the conductor may wirelessly connect with the trains network which is provided by mobile accessible router (MAR) and access points such as WLAN-access points of train 100.

The audio system 5 may be configured to receive via the local area network the VoIP message VM from the server 4, to convert the received VoIP message into an analog audio signal AM and to broadcast the analogue audio message AM via a loudspeaker 6 provided by and/or connected with audio system 5.

Typically, audio system 5 hosts a SIP agent for this purpose (public announcements).

Likewise, mobile device 1 typically also hosts a respective SIP agent, for example as a part of an app, in particular a mobile app running on mobile device 1.

In addition, audio system 5 may host a SIP agent and may convert VoIP message into analog audio signal.

The VoIP server 4 is typically configured to use paging for the public address via mobile device 1 and dial in the SIP agent for public address on the audio system 5.

For making a public announcement, the conductor may first dial in a special code using the app.

Thereafter, the conductor may hear an automatic message played by the app which requests the conductor to speak the (live) message and press a special key such as the Hash key to signal end of message.

While the conductor speaks into mobile device 1, mobile device 1 converts to and transmits the converted spoken message as VoIP message to server 4 until the special key is pressed or predefined timeout time is exceeded.

After recording the VoIP message, server 4 may dial in the SIP agent on (of) audio system 5.

Note that the SIP agent on audio system 5 typically auto attends to incoming calls for public address (public announcements).

Thereafter server 4 may transfer the recorded VoIP message to the public address SIP agent of audio system 5 using an RTP protocol, in particular an SRTP protocol.

The public address SIP agent on the audio system 5 may, typically as per an audio system configuration either makes announcement to the loud speaker 6 of the audio system 5 if the loud speaker 6 hosts a separate sip agent converting the VoIP message in an analogue audio signal, or convert the VolP message into an analog audio signal and makes the announcement to (analog) loud speaker 6.

As illustrated in Fig. 1A, the audio system typically includes an audio control device 5 and at least one loudspeaker 6 connected with the control device 5.

In other embodiments, the audio system includes or consists of at least one loudspeaker 6 hosting a sip agent. In these embodiments, the VoIP server 4 may directly transmit the VolP message to the at least one loudspeaker 6.

FIG. 1B is a block diagram schematically illustrating a system 200 for providing public announcements. The system 200 is similar to the system 100 explained above with regard to figure 1A. However, audio control device 5 of system 200 is connected with two exemplary loudspeakers 6, 7, for example a cab loudspeaker 6 and a saloon loudspeaker 7.

Typically, audio control device 5 is connected with plurality of loudspeakers 6, 7.

Further, it is illustrated in figure 1B that the wireless interface 23 of train 201 typically consists of a router and at least one wireless access point 2.

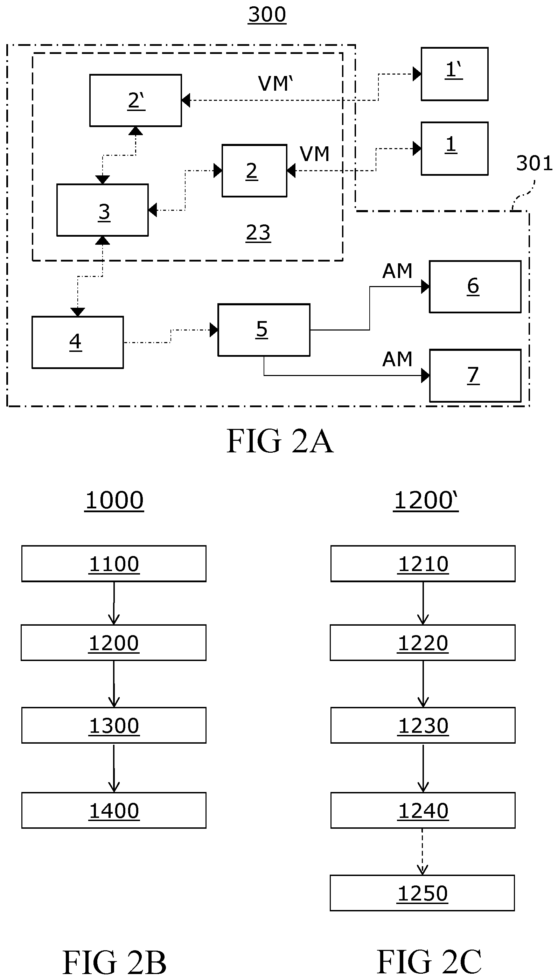

As further illustrated in figure 2A illustrating a system 300 for providing public announcements, two, more typically a plurality of wireless access points 2, 2' may be distributed within the train 301.

Accordingly, the mobile device 1 of a conductor may have access to the local area network of train 301 from at least almost any point within the train 301.

Further, another crew member may use a further mobile device 1' to make live announcements via server 4 as indicated by the VolP message VM' in figure 2A.

FIG. 2B illustrates a flow chart of a method 1000 for providing public announcements in a vehicle, in particular a train.

In a block 1100, a typically pre-registered mobile device, in particular a mobile device of a crew member is connected to a VoIP server of the vehicle.

In a subsequent block 1200, a message spoken into the mobile device is transferred to the server as VolP message.

In a subsequent block 1300, the server transmits the recorded and stored message (as VoIP message) to an audio system of the vehicle. This is typically done after completely receiving the VoIP message at the server, more typically after further expiry of a predefined time delay.

Thereafter, the audio system is used to broadcast the VolP message via loudspeakers to the passengers of the vehicle in a block 1400.

Typically, the blocks 1100 to 1200 are performed using an app running on the mobile device.

As illustrated in FIG. 2C showing a flow chart of a method 1200' that may be used as block 1200 in figure 2B, using the connected mobile device to transfer the spoken message to the VoIP server of the vehicle may include or consist of the following processes.

In a block 1210, a first (predefined) code may be transferred from the mobile device to the server to indicate that the spoken message is to be transferred.

Thereafter, the mobile device may wait for a response from the server in a block 1220. For example, the server may send a second (predefined) code to the mobile device to indicate that the mobile device can start sending the message as voice over IP message which is typically recorded by the server.

After receiving the second code, the app running on the mobile device may indicate that the live message can now be spoken into the mobile device.

After finishing speaking, the user may press a button displayed by the app on the mobile devices display to indicate the end of the message to be transferred.

If the button is pressed or a predefined timeout of silence expired, the mobile device may send a third code to the server to indicate the end of message transfer in a block 1230.

After receiving the third code, the server typically stops recording in a block 1240.

Thereafter, the VoIP server may send an acknowledge message to the mobile device in a block 1250.

Although specific embodiments have been illustrated and described herein, it will be appreciated by those of ordinary skill in the art that a variety of alternate and/or equivalent implementations may be substituted for the specific embodiments shown and described without departing from the scope of the present invention. This application is intended to cover any adaptations or variations of the specific embodiments discussed herein. Therefore, it is intended that this invention be limited only by the claims and the equivalents thereof.

### List of reference numbers

- 1, 1': mobile device
- 2, 2': wireless access point
- 3: (wireless) router
- 23: wireless interface
- 4: host / server
- 5: audio system
- 6, 7: loudspeaker
- 100, 200, 300: system
- 101, 201, 301: vehicle, train
- 1000-1500: method steps

- AM: analog audio signal
- VM, VM': Voice over IP message / VoIP message

## Claims

1. A method (1000) for providing public announcements in a vehicle for public passenger transport, in particular a respective railway vehicle (101, 201, 301), the method comprising:
- connecting (1100) a mobile device (1, 1') to a server (4) of the vehicle (101, 201, 301);
- using (1200, 1200') the connected mobile device (1, 1') to transfer a spoken live message as Voice over IP, VolP, message (VM) to the server (4), comprising:
∘ transmitting (1210) a first code from the mobile device (1, 1') to the server (4) to indicate that the spoken live message is to be transferred;
∘ transmitting a second code from the server (4) to the mobile device (1, 1') to indicate that the live message can now be spoken into the mobile device and to initiate sending the VolP message (VM) to the server (4);
∘ recording the VoIP message (VM) by the server (4); and
∘ stopping (1240) the recording of the VolP message (VM) by the server (4) after a predefined duration of silence or after receiving a third code from the mobile device (1, 1') at the server (4), the third code indicating an end of sending the VoIP message (VM) to the server (4);
- transmitting (1300) the VoIP message (VM) from the server (4) to an audio system (5) of the vehicle (101, 201, 301); and
- using (1400) the audio system (5) to convert the VoIP message (VM) into an analog audio signal (AM).

2. The method of claim 1, wherein connecting (1100) the mobile device (1, 1') to the server (4) comprises wirelessly connecting the mobile device to and/or via a wireless access point (2) of the vehicle (101, 201, 301) and/or a wireless router (23) of the vehicle (101, 201, 301), the wireless access point (2) and/or the wireless router (23) being connected to the VoIP server (4), and/or wherein an app running on the mobile device (1, 1') is used for at least one of:
- establishing a data connection to the server (4); and
- transmitting the spoken live message as VoIP message (VM) to the server (4).

3. The method of any preceding claim wherein the VoIP message (VM) is transmitted from the server (4) to the audio system (5) using a session initiation protocol, SIP, and a real time transmission protocol, RTP, wherein the server (4) provides a SIP-server functionality and a VolP-server functionality, wherein the server (4) and the audio system (5) are connected with each other via a local area network of the vehicle (101, 201, 301), wherein the server (4) is connected with the wireless access point (2) and/or the wireless router (23) via the local area network, and/or wherein the local area network is a wired data network and/or uses the Internet Protocol and/or Ethernet technology.

4. The method of any preceding claim, wherein using (1200) the connected mobile device (1, 1') to transfer the spoken live message comprises at least one of:
- converting the spoken live message into the VoIP message (VM) by the mobile device (1, 1') after connecting (1100) the mobile device (1, 1');
- sending the VoIP message (VM) to the server (4);
- receiving the VoIP message (VM) at the server (4); and
- storing the VoIP message (VM) by the server (4).

5. The method of claim 4, wherein the spoken live message is converted into the VoIP message (VM) on the fly.

6. The method of any preceding claim, further comprising at least one of:
- awaiting an input of a user prior to initiating transmitting the first code;
- receiving (1220) the second code at the mobile device (1, 1');
- transmitting (1230) the third code from the mobile device (1, 1') to the server (4); and
- sending (1250) an acknowledge message from the VolP server (4) to the mobile device (1, 1').

7. The method of claim 6, wherein the first code includes a language code, and/or wherein the VoIP message (VM) is not stored on the mobile device (1, 1') after sending to the VolP server (4) and/or after receiving the acknowledge message from the VolP server (4).

8. The method of any preceding claim, wherein the VoIP message (VM) is transmitted from the mobile device (1, 1') to the server (4) using a real time transmission protocol, RTP, in particular a secure real time transmission protocol, wherein the VoIP message (VM) is transmitted from the server (4) to the audio system (5) using the session initiation protocol, SIP, and the real time transmission protocol, and/or wherein the respect VolP-functionality is implemented via SIP and RTP.

9. The method of any preceding claim, further comprising:
- transmitting the analog audio signal (AM) to at least one of:
∘ a loudspeaker (6, 7) of the audio system (5);
∘ an analog audio connector of the audio system (5).

10. The method of any preceding claim, wherein the VoIP message (VM) is transmitted from the server (4) to the audio system (5) after completely receiving the VolP message (VM) from the mobile device (1, 1').

11. The method of claim 10, wherein a delay between receiving the VolP message (VM) and transmitting the VoIP message (VM) is larger than a predefined first value and/or less than a predefined second value.

12. A system (100, 200, 300) for providing public announcements, the system comprising:
- a wireless interface (2, 23) provided by a vehicle (101, 201, 301) for public passenger transport, and connected to a local area network of the vehicle (101, 201, 301);
- a server (4) provided by the vehicle (101, 201, 301) and connectable to the local area network;
- a mobile device (1, 1') connectable to the server (4) via the wireless interface (2, 23) and the local area network, the mobile device (1, 1') being configured to send, in a connected state, a spoken live message as Voice over IP, VolP, message (VM) to the server (4); and
- an audio system (5) provided by the vehicle (101, 201, 301), connectable with the server (4) via the local area network, and configured to receive, in a connected state, the VoIP message (VM) from the server (4) and to convert the received VoIP message into an analog audio signal (AM),
wherein the mobile device (1, 1') is configured to transmit (1210) a first code from the mobile device (1, 1') to the server (4) to indicate that the spoken live message is to be transferred, and
wherein the server is configured to:
o transmit a second code to the mobile device (1, 1') to indicate that the live message can now be spoken into the mobile device and to initiate sending the VoIP message (VM) to the server (4);
∘ record the VoIP message (VM) by the server (4); and
∘ stop (1240) the recording of the VoIP message (VM) after a predefined duration of silence or after receiving a third code from the mobile device (1, 1'), the third code indicating an end of sending the VoIP message (VM) to the server (4).

13. The system of claim 12, wherein the system is configured to perform the method of any of the claims 1 to 11, wherein the local area network is a wired data network and/or uses the Internet Protocol and/or Ethernet technology, wherein the mobile device (1, 1') is a smartphone or a tablet computer, and/or wherein the mobile device (1, 1') comprises an app which is, when running on the mobile device (1, 1'), configured to
- establish a data connecting to the server (4); and
- send the spoken live message as VoIP message (VM) to the server (4).

14. The system of any of the claims 12 to 13, wherein the vehicle (101, 201, 301) is a railway vehicle (101, 201, 301), wherein at least one of the server (4), the mobile device (1, 1'), the app, and the audio system (5) is configured to use a session initiation protocol (SIP) and a real time transmission protocol (RTP), wherein the real time transmission protocol (RTP) is implemented as a secure real time transmission protocol (SRTP), wherein the server (4) is operable as a VolP-server, wherein at least one of the mobile device, the app, the audio system (5), a controller of the audio system (5), and a loudspeaker (6, 7) of the audio system (5) is operable as SIP-agent, wherein the server (4) is provided by one or more computer devices of a passenger comfort system of the vehicle (101, 201, 301), wherein the server (4) supports different languages and/or is configured for a specific language, and/or wherein the server (4) is configured to transmit the VoIP message (VM) to the audio system (5) after completely receiving the VoIP message (VM) from the mobile device (1, 1') with a delay.

15. The system of claim 14, wherein the delay is larger than a predefined first value and/or less than a predefined second value.

## Patentansprüche

1. Verfahren (1000) zum Bereitstellen öffentlicher Durchsagen in einem Fahrzeug für den öffentlichen Personenverkehr, insbesondere einem entsprechenden Schienenfahrzeug (101, 201, 301), wobei das Verfahren aufweist:
- Verbinden (1100) eines mobilen Geräts (1, 1') mit einem Server (4) des Fahrzeugs (101, 201, 301);
- Verwenden (1200, 1200') des verbundenen mobilen Geräts (1, 1') zum Übertragen einer Live-Sprachnachricht als Voice-over-IP-Nachricht, VoIP-Nachricht, (VM) an den Server (4), aufweisend:
∘ Übertragen (1210) eines ersten Codes von der mobilen Vorrichtung (1, 1') an den Server (4), um anzuzeigen, dass die Live-Sprachnachricht übertragen werden soll;
∘ Übertragen eines zweiten Codes vom Server (4) an das mobile Gerät (1, 1'), um anzuzeigen, dass die Live-Sprachnachricht nun in die mobile Vorrichtung gesprochen werden kann, und um das Senden der VoIP-Nachricht (VM) an den Server (4) zu initiieren;
∘ Aufzeichnen der VolP-Nachricht (VM) durch den Server (4); und
∘ Beenden (1240) des Aufzeichnens der VoIP-Nachricht (VM) durch den Server (4) nach einer vordefinierten Dauer der Stille oder nach Empfangen eines dritten Codes vom mobilen Gerät (1, 1') am Server (4), wobei der dritte Code das Ende des Sendens der VolP-Nachricht (VM) an den Server (4) anzeigt;
- Übertragen (1300) der VolP-Nachricht (VM) vom Server (4) an ein Audiosystem (5) des Fahrzeugs (101, 201, 301); und
- Verwenden (1400) des Audiosystems (5), um die VolP-Nachricht (VM) in ein analoges Audiosignal (AM) umzuwandeln .

2. Verfahren nach Anspruch 1, wobei das Verbinden (1100) des mobilen Geräts (1, 1') mit dem Server (4) ein drahtlose Verbinden des mobilen Geräts mit und/oder über einen drahtlosen Zugangspunkt (2) des Fahrzeugs (101, 201, 301) und/oder einen drahtlosen Router (23) des Fahrzeugs (101, 201, 301) aufweist, wobei der drahtlose Zugangspunkt (2) und/oder der drahtlose Router (23) mit dem VolP-Server (4) verbunden sind, und/oder wobei eine auf dem mobilen Gerät (1, 1') ausgeführte App für mindestens eines von Folgendem verwendet wird:
- Herstellen einer Datenverbindung zum Server (4); und
- Übertragen der Live-Sprachnachricht als VolP-Nachricht (VM) an den Server (4).

3. Verfahren nach einem der vorstehenden Ansprüche, wobei die VolP-Nachricht (VM) vom Server (4) unter Verwendung eines Session Initiation Protocol, SIP, und eines Real Time Transmission Protocol, RTP, an das Audiosystem (5) übertragen wird, wobei der Server (4) eine SIP-Server-Funktionalität und eine VoIP-Server-Funktionalität bereitstellt, wobei der Server (4) und das Audiosystem (5) über ein lokales Netzwerk des Fahrzeugs (101, 201, 301) miteinander verbunden sind, wobei der Server (4) über das lokale Netzwerk mit dem drahtlosen Zugangspunkt (2) und/oder dem drahtlosen Router (23) verbunden ist und/oder wobei das lokale Netzwerk ein drahtgebundenes Datennetzwerk ist und/oder das Internetprotokoll und/oder die Ethernet-Technologie verwendet.

4. Das Verfahren nach einem der vorstehenden Ansprüche, wobei das Verwenden (1200) des verbundenen mobilen Geräts (1, 1') zum Übertragen der Live-Sprachnachricht mindestens eines von Folgendem aufweist:
- Umwandeln der Live-Sprachnachricht in die VolP-Nachricht (VM) durch das mobile Gerät (1, 1') nach dem Verbinden (1100) des mobilen Geräts (1, 1');
- Senden der VolP-Nachricht (VM) an den Server (4);
- Empfangen der VolP-Nachricht (VM) am Server (4); und
- Speichern der VolP-Nachricht (VM) durch den Server (4).

5. Verfahren nach Anspruch 4, wobei die Live-Sprachnachricht in Echtzeit in die VoIP-Nachricht (VM) umgewandelt wird.

6. Verfahren nach einem der vorstehenden Ansprüche, das ferner mindestens eines von Folgendem aufweist:
- Warten auf eine Eingabe eines Nutzers vor dem Initiieren der Übertragung des ersten Codes;
- Empfangen (1220) des zweiten Codes am mobilen Gerät (1, 1');
- Übertragen (1230) des dritten Codes vom mobilen Gerät (1, 1') an den Server (4); und
- Senden (1250) einer Bestätigungsnachricht vom VolP-Server (4) an das mobile Gerät (1, 1') .

7. Verfahren nach Anspruch 6, wobei der erste Code einen Sprachcode enthält und/oder wobei die VolP-Nachricht (VM) nach dem Senden an den VolP-Server (4) und/oder nach dem Empfangen der Bestätigungsnachricht vom VolP-Server (4) nicht auf dem mobilen Gerät (1, 1') gespeichert wird.

8. Verfahren nach einem der vorstehenden Ansprüche, wobei die VolP-Nachricht (VM) unter Verwendung eines Echtzeitübertragungsprotokolls, RTP, insbesondere einem sicheren Echtzeitübertragungsprotokoll übertragen wird, wobei die VolP-Nachricht (VM) vom Server (4) unter Verwendung des Sitzungsinitiierungsprotokolls, SIP, und des Echtzeitübertragungsprotokolls an das Audiosystem (5) übertragen wird, und/oder wobei die jeweilige VolP-Funktionalität über SIP und RTP implementiert ist.

9. Verfahren nach einem der vorstehenden Ansprüche, das weiter aufweist:
- Übertragen des analogen Audiosignals (AM) an
∘ einen Lautsprecher (6, 7) des Audiosystems (5); und/oder
∘ einen analogen Audioanschluss des Audiosystems (5) .

10. Verfahren nach einem der vorstehenden Ansprüche, wobei die VolP-Nachricht (VM) vom Server (4) an das Audiosystem (5) übertragen wird, nachdem die VolP-Nachricht (VM) vollständig von dem mobilen Gerät (1, 1') empfangen wurde.

11. Verfahren nach Anspruch 10, wobei eine Verzögerung zwischen dem Empfangen der VolP-Nachricht (VM) und der Übertragung der VolP-Nachricht (VM) größer als ein vordefinierter erster Wert und/oder kleiner als ein vordefinierter zweiter Wert ist.

12. System (100, 200, 300) zum Bereitstellen öffentlicher Durchsagen, wobei das System aufweist:
- eine drahtlose Schnittstelle (2, 23), die von einem Fahrzeug (101, 201, 301) für den öffentlichen Personenverkehr bereitgestellt wird und mit einem lokalen Netzwerk des Fahrzeugs (101, 201, 301) verbunden ist;
- einen Server (4), der von dem Fahrzeug (101, 201, 301) bereitgestellt wird und mit dem lokalen Netzwerk verbunden werden kann;
- ein mobiles Gerät (1, 1'), das über die drahtlose Schnittstelle (2, 23) und das lokale Netzwerk mit dem Server (4) verbunden werden kann, wobei das mobile Gerät (1, 1') so konfiguriert ist, dass es in einem verbundenen Zustand eine Live-Sprachnachricht als Voice-over-IP-Nachricht, VolP-Nachricht, (VM) an den Server (4) senden kann; und
- ein vom Fahrzeug (101, 201, 301) bereitgestelltes Audiosystem (5), das über das lokale Netzwerk mit dem Server (4) verbunden werden kann und so konfiguriert ist, dass es in einem verbundenen Zustand die VolP-Nachricht (VM) vom Server (4) empfangen und die empfangene VolP-Nachricht in ein analoges Audiosignal (AM) umwandeln kann,
wobei das mobile Gerät (1, 1') so konfiguriert ist, dass es einen ersten Code vom mobilen Gerät (1, 1') an den Server (4) senden kann (1210), um anzuzeigen, dass die Live-Sprachnachricht übertragen werden soll, und
wobei der Server so konfiguriert ist, dass er:
∘ einen zweiten Code an das mobile Gerät (1, 1') senden kann, um anzuzeigen, dass die Live-Sprachnachricht nun in das mobile Gerät gesprochen werden kann, und um das Senden der VolP-Nachricht (VM) an den Server (4) zu initiieren;
∘ die VolP-Nachricht (VM) durch den Server (4) aufzuzeichnen; und
∘ das Aufzeichnen der VolP-Nachricht (VM) nach einer vordefinierten Dauer der Stille oder nach dem Empfangen eines dritten Codes vom mobilen Gerät (1, 1') zu beenden (1240), wobei der dritte Code das Ende des Sendens der VolP-Nachricht (VM) an den Server (4) anzeigt.

13. System nach Anspruch 12, wobei das System so konfiguriert ist, dass es das Verfahren nach einem der Ansprüche 1 bis 11 ausführen kann, wobei das lokale Netzwerk ein kabelgebundenes Datennetzwerk ist und/oder das Internetprotokoll und/oder die Ethernet-Technologie verwendet, wobei das mobile Gerät (1, 1') ein Smartphone oder ein Tablet-Computer ist und/oder wobei das mobile Gerät (1, 1') eine App aufweist, die, wenn sie auf dem mobilen Gerät (1, 1') ausgeführt wird, konfiguriert ist
- eine Datenverbindung zum Server (4) herzustellen; und
- die Live-Sprachnachricht als VolP-Nachricht (VM) an den Server (4) zu senden.

14. System nach einem der Ansprüche 12 bis 13, wobei das Fahrzeug (101, 201, 301) ein Schienenfahrzeug (101, 201, 301) ist, wobei der Server (4), das mobile Gerät (1, 1'), die App und/oder das Audiosystem (5) konfiguriert sind, ein Sitzungsinitiierungsprotokoll (SIP) und ein Echtzeitübertragungsprotokoll (RTP) zu verwenden, wobei das Echtzeitübertragungsprotokoll (RTP) als sicheres Echtzeitübertragungsprotokoll (SRTP) implementiert sind, wobei der Server (4) als VolP-Server betreibbar ist, wobei das mobile Gerät, die App, das Audiosystem (5), eine Steuerung des Audiosystems (5), und/oder ein Lautsprecher (6, 7) des Audiosystems (5) als SIP-Agent betreibbar sind, wobei der Server (4) durch eine oder mehrere Computervorrichtungen eines Passagierkomfortsystems des Fahrzeugs (101, 201, 301) bereitgestellt wird, wobei der Server (4) verschiedene Sprachen unterstützt und/oder für eine bestimmte Sprache konfiguriert ist und/oder wobei der Server (4) konfiguriert ist, die VolP-Nachricht (VM) nach vollständigem Empfangen der VoIP-Nachricht (VM) vom mobilen Gerät (1, 1') mit einer Verzögerung an das Audiosystem (5) zu übertragen.

15. System nach Anspruch 14, wobei die Verzögerung größer als ein vordefinierter erster Wert und/oder kleiner als ein vordefinierter zweiter Wert ist.

## Revendications

1. Procédé (1000) permettant de fournir des annonces publiques dans un véhicule destiné au transport public de voyageurs, en particulier un véhicule ferroviaire respectif (101, 201, 301), le procédé comprenant :
- la connexion (1100) d'un dispositif mobile (1, 1') à un serveur (4) du véhicule (101, 201, 301) ;
- l'utilisation (1200, 1200') du dispositif mobile connecté (1, 1') pour transférer un message en direct prononcé en tant que message de voix sur IP, VoIP, (VM) au serveur (4), comprenant :
∘ la transmission (1210) d'un premier code du dispositif mobile (1, 1') au serveur (4) pour indiquer que le message en direct prononcé doit être transféré ;
∘ la transmission d'un deuxième code du serveur (4) au dispositif mobile (1, 1') pour indiquer que le message en direct peut maintenant être prononcé dans le dispositif mobile et pour initier l'envoi du message VoIP (VM) au serveur (4) ;
∘ l'enregistrement du message VolP (VM) par le serveur (4) ; et
∘ l'arrêt (1240) de l'enregistrement du message VoIP (VM) par le serveur (4) après une durée de silence prédéfinie ou après la réception d'un troisième code en provenance du dispositif mobile (1, 1') au niveau du serveur (4), le troisième code indiquant une fin de l'envoi du message VolP (VM) au serveur (4) ;
- la transmission (1300) du message VolP (VM) du serveur (4) à un système audio (5) du véhicule (101, 201, 301) ; et
- l'utilisation (1400) du système audio (5) pour convertir le message VoIP (VM) en un signal audio analogique (AM).

2. Procédé selon la revendication 1, dans lequel la connexion (1100) du dispositif mobile (1, 1') au serveur (4) comprend la connexion sans fil du dispositif mobile à et/ou par l'intermédiaire d'un point d'accès sans fil (2) du véhicule (101, 201, 301) et/ou d'un routeur sans fil (23) du véhicule (101, 201, 301), le point d'accès sans fil (2) et/ou le routeur sans fil (23) étant connectés au serveur VolP (4), et/ou dans lequel une application s'exécutant sur le dispositif mobile (1, 1') est utilisée pour au moins l'un parmi :
- l'établissement d'une connexion de données au serveur (4) ; et
- la transmission du message en direct prononcé sous forme de message VolP (VM) au serveur (4).

3. Procédé selon une quelconque revendication précédente, dans lequel le message VolP (VM) est transmis du serveur (4) au système audio (5) à l'aide d'un protocole d'initiation de session, SIP, et d'un protocole de transmission en temps réel, RTP, dans lequel le serveur (4) fournit une fonctionnalité SIP-serveur et une fonctionnalité VolP-serveur, dans lequel le serveur (4) et le système audio (5) sont connectés l'un à l'autre par l'intermédiaire d'un réseau local du véhicule (101, 201, 301), dans lequel le serveur (4) est connecté au point d'accès sans fil (2) et/ou au routeur sans fil (23) par l'intermédiaire du réseau local, et/ou dans lequel le réseau local est un réseau de données filaire et/ou utilise le protocole Internet et/ou la technologie Ethernet.

4. Procédé selon une quelconque revendication précédente, dans lequel l'utilisation (1200) du dispositif mobile connecté (1, 1') pour transférer le message en direct prononcé comprend au moins l'un parmi :
- la conversion du message en direct prononcé en message VolP (VM) par le dispositif mobile (1, 1') après la connexion (1100) du dispositif mobile (1, 1') ;
- l'envoi du message VoIP (VM) au serveur (4) ;
- la réception du message VolP (VM) au niveau du serveur (4) ; et
- le stockage du message VolP (VM) par le serveur (4).

5. Procédé selon la revendication 4, dans lequel le message en direct prononcé est converti en message VolP (VM) à la volée.

6. Procédé selon une quelconque revendication précédente, comprenant en outre au moins l'un parmi :
- l'attente d'une entrée d'un utilisateur avant d'initier la transmission du premier code ;
- la réception (1220) du deuxième code au niveau du dispositif mobile (1, 1') ;
- la transmission (1230) du troisième code du dispositif mobile (1, 1') au serveur (4) ; et
- l'envoi (1250) d'un message d'accusé de réception du serveur VolP (4) au dispositif mobile (1, 1').

7. Procédé selon la revendication 6, dans lequel le premier code comporte un code de langue, et/ou dans lequel le message VoIP (VM) n'est pas stocké sur le dispositif mobile (1, 1') après l'envoi au serveur VolP (4) et/ou après la réception du message d'accusé de réception en provenance du serveur VolP (4).

8. Procédé selon une quelconque revendication précédente, dans lequel le message VoIP (VM) est transmis du dispositif mobile (1, 1') au serveur (4) à l'aide d'un protocole de transmission en temps réel, RTP, en particulier un protocole de transmission en temps réel sécurisé, dans lequel le message VoIP (VM) est transmis du serveur (4) au système audio (5) à l'aide du protocole d'initiation de session, SIP, et du protocole de transmission en temps réel, et/ou dans lequel la fonctionnalité de respect VolP est mise en œuvre par l'intermédiaire de SIP et RTP.

9. Procédé selon une quelconque revendication précédente, comprenant en outre :
- la transmission du signal audio analogique (AM) à au moins l'un parmi :
∘ un haut-parleur (6, 7) du système audio (5) ;
∘ un connecteur audio analogique du système audio (5).

10. Procédé selon une quelconque revendication précédente, dans lequel le message VoIP (VM) est transmis du serveur (4) au système audio (5) après la réception complète du message VoIP (VM) en provenance du dispositif mobile (1, 1').

11. Procédé selon la revendication 10, dans lequel un délai entre la réception du message VoIP (VM) et la transmission du message VolP (VM) est supérieur à une première valeur prédéfinie et/ou inférieur à une seconde valeur prédéfinie.

12. Système (100, 200, 300) permettant de fournir des annonces publiques, le système comprenant :
- une interface sans fil (2, 23) fournie par le véhicule (101, 201, 301) destiné au transport public de voyageurs, et connectée à un réseau local du véhicule (101, 201, 301) ;
- un serveur VolP (4) fourni par le véhicule (101, 201, 301) et connecté au réseau local ;
- un dispositif mobile (1, 1') pouvant être connecté au serveur (4) par l'intermédiaire de l'interface sans fil (2, 23) et du réseau local, le dispositif mobile (1, 1') étant configuré pour envoyer, dans un état connecté, un message en direct prononcé en tant que message de voix sur IP, VolP (VM) au serveur (4) ; et
- un système audio (5) fourni par le véhicule (101, 201, 301), pouvant être connecté au serveur (4) par l'intermédiaire du réseau local, et configuré pour recevoir, dans un état connecté, le message VolP (VM) en provenance du serveur (4) et pour convertir le message VolP reçu en un signal audio analogique (AM),
dans lequel le dispositif mobile (1, 1') est configuré pour transmettre (1210) un premier code du dispositif mobile (1, 1') au serveur (4) pour indiquer que le message en direct prononcé doit être transféré, et
dans lequel le serveur est configuré pour :
∘ transmettre un deuxième code au dispositif mobile (1, 1') pour indiquer que le message en direct peut maintenant être prononcé dans le dispositif mobile et pour initier l'envoi du message VoIP (VM) au serveur (4) ;
∘ enregistrer le message VoIP (VM) par le serveur (4) ; et
∘ arrêter (1240) l'enregistrement du message VolP (VM) après une durée de silence prédéfinie ou après la réception d'un troisième code en provenance du dispositif mobile (1, 1'), le troisième code indiquant une fin de l'envoi du message VoIP (VM) au serveur (4).

13. Système selon la revendication 12, dans lequel le système est configuré pour réaliser le procédé selon l'une quelconque des revendications 1 à 11, dans lequel le réseau local est un réseau de données filaire et/ou utilise le protocole Internet et/ou la technologie Ethernet, dans lequel le dispositif mobile (1, 1') est un mobile multifonction ou une tablette électronique, et/ou dans lequel le dispositif mobile (1, 1') comprend une application qui, lorsqu'elle est exécutée sur le dispositif mobile (1, 1'), est configurée pour
- établir une connexion de données au serveur (4) ; et
- envoyer le message en direct prononcé sous forme de message VoIP (VM) au serveur (4).

14. Système selon l'une quelconque des revendications 12 à 13, dans lequel le véhicule (101, 201, 301) est un véhicule ferroviaire (101, 201, 301), dans lequel au moins l'un parmi le serveur (4), le dispositif mobile (1, 1'), l'application, et le système audio (5) est configuré pour utiliser un protocole d'initiation de session (SIP) et un protocole de transmission en temps réel (RTP), dans lequel le protocole de transmission en temps réel (RTP) est mis en œuvre en tant que protocole de transmission en temps réel sécurisé (SRTP), dans lequel le serveur (4) peut fonctionner en tant que serveur VolP, dans lequel au moins l'un parmi le dispositif mobile, l'application, le système audio (5), un dispositif de commande du système audio (5) et un haut-parleur (6, 7) du système audio (5) peut fonctionner en tant qu'agent SIP, dans lequel le serveur (4) est fourni par un ou plusieurs dispositifs informatiques d'un système de confort des voyageurs du véhicule (101, 201, 301), dans lequel le serveur (4) prend en charge différentes langues et/ou est configuré pour une langue spécifique, et/ou dans lequel le serveur (4) est configuré pour transmettre le message VoIP (VM) au système audio (5) après la réception complète du message VoIP (VM) en provenance du dispositif mobile (1, 1') avec un délai.

15. Système selon la revendication 14, dans lequel le délai est supérieur à une première valeur prédéfinie et/ou inférieur à une seconde valeur prédéfinie.
